# EUROPEAN PATENT SPECIFICATION

(11) **EP 3 157 212 B1**
(45) Date of publication and mention of the grant of the patent: **04.11.2020**
(21) Application number: 15812196.2
(22) Date of filing: 16.01.2015
(51) Int. Cl.: H04L 12/861, H04L 12/815, H04L 12/863

(54) **PACKET PROCESSING METHOD AND DEVICE, AND LINE CARD**
PAKETVERARBEITUNGSVERFAHREN UND VORRICHTUNG SOWIE LEITUNGSKARTE
PROCÉDÉ ET DISPOSITIF DE TRAITEMENT DE PAQUET, ET CIRCUIT DE LIGNE

(30) Priority: 24.06.2014 CN 201410289436
(43) Date of publication of application: 19.04.2017
(73) Proprietor: ZTE Corporation, Shenzhen, Guangdong 518057 (CN)
(72) Inventor: GAN, Jian, Shenzhen Guangdong 518057 (CN); LI, Xiaowei, Shenzhen Guangdong 518057 (CN)
(74) Representative: Regimbeau
(86) International application number: PCT/CN2015/070942
(87) International publication number: WO 2015/196799

(56) References cited:
- EP-A1- 2 254 277
- WO-A1-01/63860
- WO-A2-2004/057817
- CN-A- 1 866 905
- CN-A- 101 552 722
- CN-A- 101 917 646
- US-A1- 2003 231 593
- US-A1- 2006 146 711
- US-A1- 2012 051 372

## Description

### TECHNICAL FIELD

The present disclosure relates to the field of communications, and in particular relates to a message processing method and device, and a line card.

### BACKGROUND

In relevant technologies, it is impossible to effectively defend a network attack due to openness of a network, and various network accidents occur frequently. For example, hacker attack already becomes a serious disease of the network industry and is denounced by governments of all countries. At present, the attack means for a network device mainly includes four categories: Denial of Service attack, using attack, information collection attack and false message attack. The Denial of Service (DoS for short) attack attempts to prevent a target device from providing a normal service by enabling the target device to collapse or be overwhelmed, which is an attack behavior easily implemented at present and mainly includes ping of death, teardrop, flood attack, Land attack, Smurf attack, etc. When the DoS attack occurs, a large number of data packets start to attack the network devices, so that Central Processing Unit (CPU) resources of the network device cannot accept a request of a normal user, or a CPU of the network device is suspended and cannot work normally.

At present, a universal attack defense method includes: classifying received messages and carrying out control for speed limitation, so as to achieve the purpose of protecting the CPU resources. For example, traffic policing (Committed Access Rate (CAR)) limitation is carried out on messages sent from different Internet Protocol (IP) addresses respectively, CAR channels are respectively configured for the messages, and hash processing is carried out on the messages sent from the IP addresses based on the IP addresses.

The method can solve the problem of attack defense to a certain extent. However, the method cannot effectively defend the messages having attack from the same IP address.

Therefore, the relevant technologies have the problem of low reliability of attack defense for the messages.

Document US2012/0051372A1 provides a shaping apparatus which includes a plurality of buffers that a set with a writable upper limit size and a buffer where a read processing s carried out is switched every predetermined time. Further relevant technologies are also known from US2006/146711 which relates to a method of controlling packet flow through a network node in a packet-switched communication network, and EP2254277 which relates to a control management system for managing voice-over-IP parameters including a network traffic shaping control state model for a network traffic shaping control.

### SUMMARY

The present disclosure provides a message processing method according to claim 1, a message processing device according to claim 5, and a line card according to claim 9 as defined in the attached independent claims, so as to at least solve the problem of low reliability of attack defense for messages in relevant technologies. Further improvements are provided in the dependent claims 2-4 and 6-8.

Through the present disclosure, the received messages are stored to the buffer areas corresponding to the message types according to the message types; and the messages stored in the buffer areas are shaped, thereby solving the problem of low reliability of attack defense for the messages in the relevant technologies, so as to achieve the effects of effectively controlling attack messages and improving the reliability of a device.

### BRIEF DESCRIPTION OF DRAWINGS

Drawings described herein are used for providing further understanding for the present disclosure and form a part of the present application. An exemplary embodiment of the present invention and the description for the exemplary embodiment are used for explaining the present disclosure, rather than limiting the present disclosure. In the drawings:
Fig. 1 is a flow chart illustrating a message processing method according to embodiments of the present invention;
Fig. 2 is a structural block diagram illustrating a message processing device according to embodiments of the present invention;
Fig. 3 is a first structural block diagram illustrating a message processing device according to embodiments of the present invention;
Fig. 4 is a structural block diagram illustrating a storage module 22 in a message processing device according to embodiments of the present invention;
Fig. 5 is a structural block diagram illustrating a processing module 24 in a message processing device according to embodiments of the present invention;
Fig. 6 is a second structural block diagram illustrating a message processing device according to embodiments of the present invention;
Fig. 7 is a structural block diagram illustrating a line card according to embodiments of the present invention;
Fig. 8 is a schematic frame diagram illustrating a line card for attack defense in terms of message types according to embodiments of the present invention;
Fig. 9 is a flow chart illustrating an attack defense method in terms of message types according to embodiments of the present invention; and
Fig. 10 is a flow chart illustrating processing of an attack defense method by a Packet Transport Network (PTN) device in terms of message types according to an embodiment of the present invention.

### DETAILED DESCRIPTION

The present disclosure is described in detail with reference to the drawings and in combination with embodiments. It should be noted that under the condition of no conflict, embodiments in the present application can be combined with the features in embodiments.

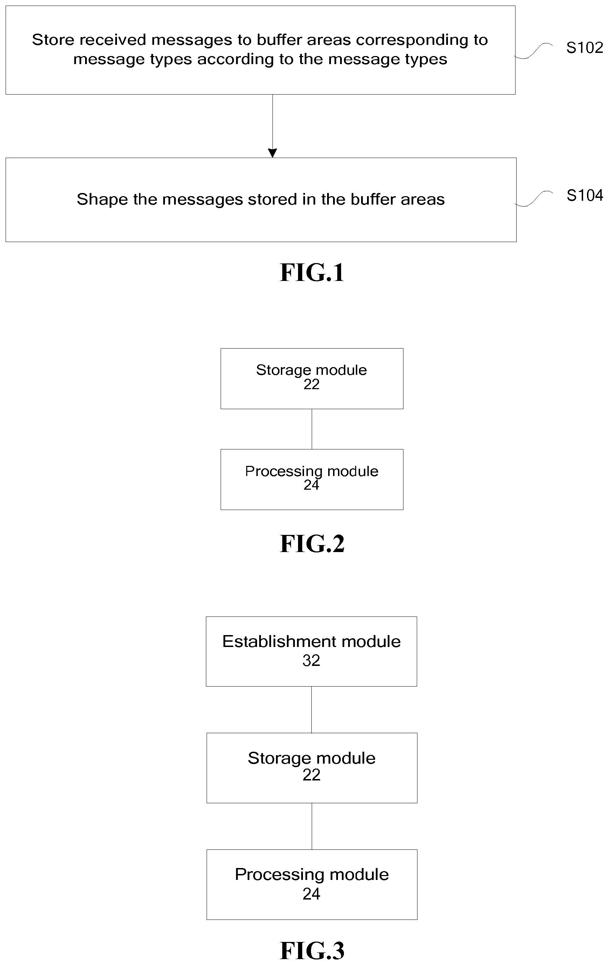

The present embodiment provides a message processing method. Fig. 1 is a flow chart illustrating the message processing method according to embodiments of the present invention. As shown in Fig. 1, the flow includes following steps.

In s102, received messages are stored to buffer areas corresponding to message types according to the message types; and
in s104, the messages stored in the buffer areas are shaped.

Through the above steps, relative to filtration for the messages according to IP addresses in relevant technologies, the step of shaping the messages respectively according to the message types can solve the problem of affecting processing for normal messages when the messages are filtered only according to the IP addresses in the relevant technologies, and a solution of shaping the messages according to the message types can effective improve the accuracy of defending the message attack.

In order to quickly achieve corresponding processing for the messages according to the message types, before the received messages are stored to the buffer areas corresponding to the message types according to the message types, mapping relationships between the message types and the buffer areas are established, and the messages are stored to the buffer areas corresponding to the message types according to the mapping relationships. In addition, when the received messages are stored to the buffer areas corresponding to the message types according to the message types, the received messages may also be identified, and the types of the received messages are distinguished according to identifications.

When the messages stored in the buffer areas are shaped, many manners can be adopted. For example, shaping values of message traffic for limiting the message types can be configured according to the messages corresponding to the message types; and the messages stored in the buffer areas are shaped according to the configured shaping values. It should be noted that the shaping values are configured according to the processing capacity for the message types of a device. After the messages stored in the buffer areas are shaped, the shaped messages are sent to a CPU for processing. Through adoption of the above processing, the processing for a large number of attack messages of the CPU can be effectively avoided, and the processing only for the normal messages can also be achieved to a certain extent.

The present embodiment also provides a message processing device, which is used in the above embodiment and an implementation manner, and the contents that have been described are not repeated herein. For example, a term "module" used below can realize combination of software and/or hardware with predetermined functions. Although the device described in following embodiments are better realized by software, the realization of the device through hardware or combination of software and hardware is also possible and is conceived.

Fig. 2 is a structural block diagram illustrating the message processing device according to embodiments of the present invention. As shown in Fig. 2, the device includes: a storage module 22 and a processing module 24. The device is described as follows:
the storage module 22 is configured to store received messages to buffer areas corresponding to message types according to the message types; and the processing module 24 is connected to the above storage module 22 and is configured to shape the messages stored in the buffer areas.

Fig. 3 is a first structural block diagram illustrating the message processing device according to embodiments of the present invention. As shown in Fig. 3, the device further includes an establishment module 32 in addition to all modules shown in Fig. 2. The establishment module 32 is described as follows:
the establishment module 32 is connected to the above storage module 22 and is configured to establish mapping relationships between the message types and the buffer areas and store the messages to the buffer areas corresponding to the message types according to the mapping relationships.

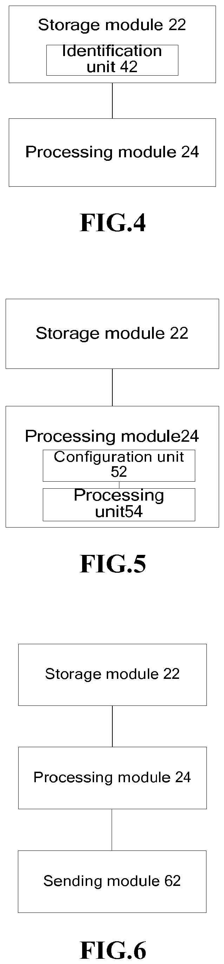

Fig. 4 is a structural block diagram illustrating the storage module 22 in the message processing device according to embodiments of the present invention. As shown in Fig. 4, the storage module 22 includes: an identification unit 42. The identification unit 42 is described as follows:
the identification unit 42 is configured to identify the received messages and distinguish the types of the received messages according to the identifications.

Fig. 5 is a structural block diagram illustrating the processing module 24 in the message processing device according to embodiments of the present invention. As shown in Fig. 5, the processing module 24 includes: a configuration unit 52 and a processing unit 54. The processing module 24 is described as follows:
the configuration unit 52 is configured to configure shaping values of message traffic for limiting the message types according to the messages corresponding to the message types; and the processing unit 54 is connected to the above configuration unit 52 and is configured to shape the messages stored in the buffer areas according to the configured shaping values.

Fig. 6 is a second structural block diagram illustrating the message processing device according to embodiments of the present invention. As shown in Fig. 6, the device further includes a sending module 62 in addition to all modules shown in Fig. 2. The sending module 62 is described as follows:
the sending module 62 is connected to the above processing module 24 and is configured to send the shaped messages to a CPU for processing.

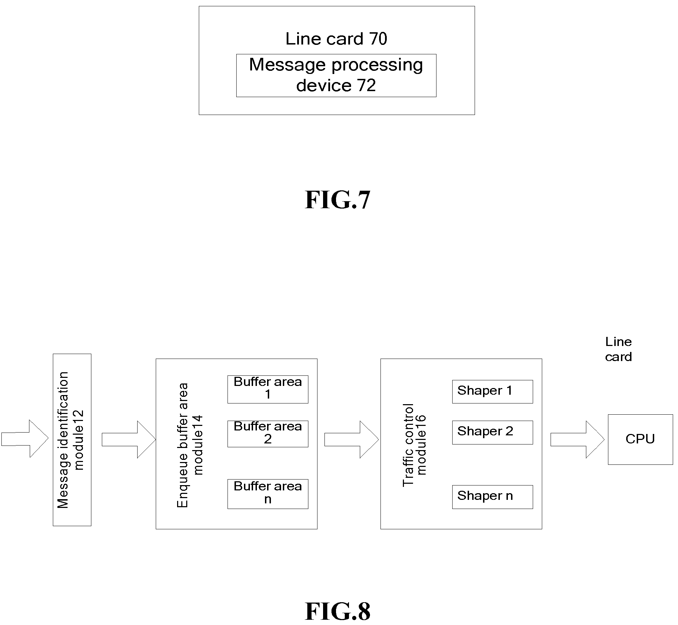

Fig. 7 is a structural block diagram illustrating a line card according to embodiments of the present invention. As shown in Fig. 7, the line card 70 includes the message processing device 72 described in any of the above items.

For the problem of low reliability of attack defense for the messages in the relevant technologies, in consideration of too many message types on the current network, message attack in many scenarios can affect normal services if the message processing is only based on IP addresses without considering the message types. For example, messages sent from the same IP address include a 1588 protocol message, an Operation Administration Maintenance (OAM) message, and the like; if the 1588 protocol message is a normal message, and the OAM message is an attack message sent by an attacker by simulating the IP address, since the current method can realize classification control only according to the IP address, the OAM attack message affects the normal 1588 protocol message. Based on this, the present embodiment proposes a processing method for attack defense according to message types; and the messages are reclassified according to the message types, so that the messages can be controlled and dispatched more detailedly, thereby perfecting the current universal attack defense method and effectively improving the reliability of attack defense.

The processing method for attack defense according to the message types mainly provides an attack defense function on a PTN device/a router device, which can improve the reliability and the stability of the device and can effectively solve the problem of security of network devices.

The method for attack defense is described as follows based on the drawings.

Fig. 8 is a schematic frame diagram illustrating a line card for attack defense in terms of message types according to embodiments of the present invention. As shown in Fig. 8, the architecture includes: a message identification module 10, an enqueue buffer area module 12 (the functions of the above two modules are equivalent to that of the above storage module 22) and a traffic control module 14 (equivalent to the above processing module 24), and the relevant modules are located in a line card processing unit of a device. The functions of all modules are respectively described as follows:

the message identification module 10 is configured to scan messages received by the device, identify messages to be sent to a CPU for processing and carry out special identification on the messages for distinguishing the message types of different services;
the enqueue buffer area module 12 is configured to store the received messages, wherein different types of service messages can be stored in different buffer areas; and
the traffic control module 14 is configured to shape and control the enqueue messages in the buffer areas according to the configured shaping values.

It should be noted that the above three modules need to be configured accordingly.

In the message identification module 10: processing of many types of messages is supported by the device; special identifiers need to be distributed to various messages, and mapping relationships from the relevant identifiers to enqueue buffer areas are configured.

In the enqueue buffer area module 12: a plurality of different buffer areas are distributed in a chip according to supported messaged types for storing corresponding messages, and mapping relationships from the corresponding buffer areas to the traffic control module are configured.

In the traffic control module 14: shaping values are configured according to the supported message types, wherein the shaping values of different types of messages need to be configured respectively according to the processing capacity for different messages of the device.

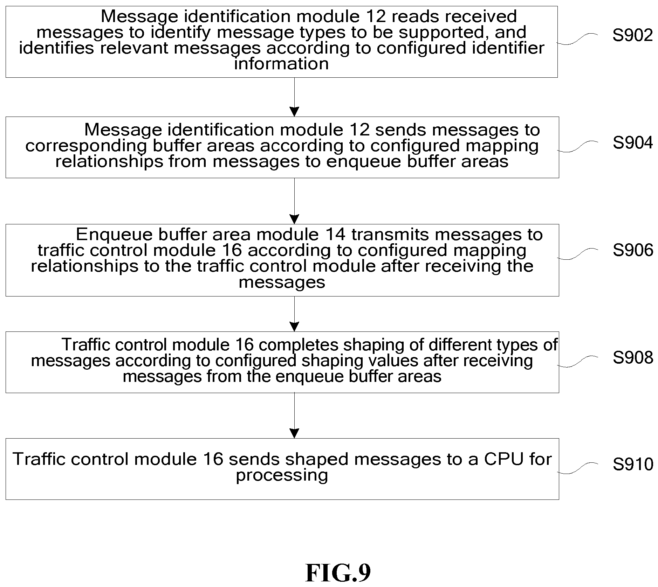

Based on the architectural schematic diagram of the above line card, the present embodiment also provides an attack defense method according to message types. Fig. 9 is a flow chart illustrating the attack defense method in terms of message types according to embodiments of the present invention. As shown in Fig. 9, the flow includes following steps.

In S902, message identification module 12 reads received messages to identify message types to be supported, and identifies relevant messages according to configured identifier information;
in S904, message identification module 12 sends messages to corresponding buffer areas according to configured mapping relationships from messages to enqueue buffer areas;
in S906, enqueue buffer area module 14 transmits messages to traffic control module 16 according to configured mapping relationships to the traffic control module after receiving messages;
in S908, traffic control module 16 completes shaping of different types of messages according to configured shaping values after receiving messages from the enqueue buffer areas; and
in S910, traffic control module 16 sends shaped messages to a CPU for processing.

Through the above examples and the implementation manner, since the shaping values configured in the traffic control module 16 are configured according to the processing capacity supported by the device, the device can be ensured to only receive the number of messages matched with the processing capacity of the device under the condition of abnormal attack, so as to ensure the reliability of the device.

The realization solution is described as follows in combination with the PTN device. The relevant modules in the present embodiment are arranged on the line card of the PTN device, and the message types processed by support of the device includes a 1588 protocol message, a Data Communication Network (DCN) message, an OAM message, other ordinary protocol messages, etc.

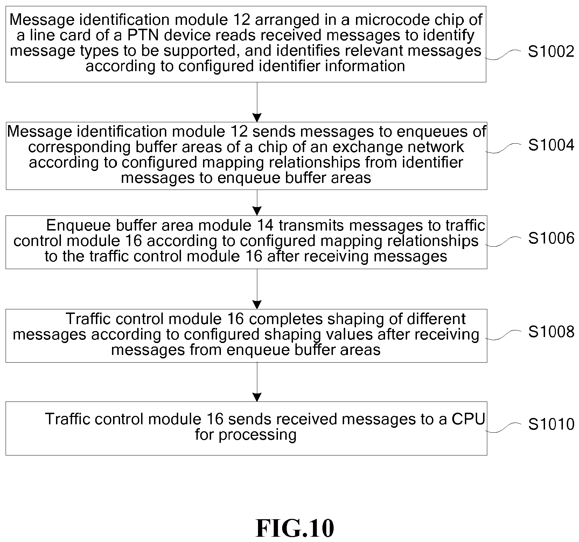

Fig. 10 is a flow chart illustrating processing of an attack defense method by an PTN device in terms of message types according to an embodiment of the present invention. As shown in Fig. 10, the flow includes following steps.

In s1002, message identification module 12 arranged in a microcode chip of a line card of the PTN device reads received messages to identify message types to be supported, and identifies relevant messages according to configured identifier information;
in s1004, message identification module 12 sends messages to enqueues of corresponding buffer areas of a chip of an exchange network according to configured mapping relationships from identifier messages to enqueue buffer areas;
in s1006, enqueue buffer area module 14 transmits messages to traffic control module 16 according to configured mapping relationships to the traffic control module 16 after receiving messages;
in s1008, traffic control module 16 completes shaping of different messages according to configured shaping values after receiving messages from enqueue buffer areas; and
in s1010, traffic control module 16 sends received messages to a CPU for processing.

Apparently, those skilled in the art should understand that all the above modules or steps of the present disclosure can be realized by a general computing device and can be concentrated on a single computing device or distributed on a network formed by a plurality of computing devices. Alternatively, all the above modules or steps of the present disclosure can be realized by executable program codes of the computing device, so as to be stored in a storage device and executed by the computing device; and under some conditions, the shown or described steps can be executed in a sequence different form that herein, or realized in a way that all the above modules or steps are respectively made into each integrated circuit module, or a plurality of modules or steps thereof are made into a single integrated circuit module. In this way, the present disclosure is not limited to any specific combination of hardware and software.

The above descriptions are only examples of the present invention, rather than a limit to the present disclosure. For those skilled in the art, the present disclosure can have various modifications and changes. Any modification, equivalent replacement, improvement and the like within the principle of the present disclosure should be included in the protection scope of the present disclosure.

## Claims

1. A message processing method, comprising:
storing (S102) received messages to buffer areas corresponding to message types according to the message types,
shaping (S104) the messages stored in the buffer areas through shaping values configuration and traffic shaping,
wherein the shaping (S104) the messages stored in the buffer areas through shaping values configuration and traffic shaping comprises:
configuring, by a device, shaping values of different types of messages according to processing capacity of the device for different types of messages; and
shaping the messages stored in the buffer areas according to the configured shaping values.

2. The method according to claim 1, further comprising, before the storing (S102) of received messages to buffer areas corresponding to message types according to the message types:
establishing mapping relationships between the message types and the buffer areas, and storing the messages to the buffer areas corresponding to the message types according to the mapping relationships.

3. The method according to claim 1, wherein the storing (S102) of received messages to buffer areas corresponding to message types according to the message types comprises:
identifying the received messages and distinguishing types of the received messages according to identifications.

4. The method according to any of claims 1-3, further comprising, after the shaping (S104) the messages stored in the buffer areas:
sending (S910) shaped messages to a Central Processing Unit for processing.

5. A message processing device, comprising:
a storage module (22), configured to store received messages to buffer areas corresponding to message types according to the message types,
a processing module (24), configured to shape the messages stored in the buffer areas through shaping values configuration and traffic shaping,
wherein the processing module (24) comprises:
a configuration unit (52), configured to configure shaping values of different types of messages according to processing capacity of the message processing device for different types of messages; and
a processing unit (54), configured to shape the messages stored in the buffer areas according to the configured shaping values.

6. The device according to claim 5, further comprising:
an establishment module (32), configured to establish mapping relationships between the message types and the buffer areas, and to store the messages to the buffer areas corresponding to the message types according to the mapping relationships.

7. The device according to claim 5, wherein the storage module (22) comprises:
an identification unit (42), configured to identify the received messages and to distinguish types of the received messages according to identifications.

8. The device according to any of claims 5-7, further comprising:
a sending module (62), configured to send shaped messages to a Central Processing Unit for processing.

9. A line card, comprising the device of any of claims 5-8.

## Patentansprüche

1. Nachrichtenverarbeitungsverfahren, das Folgendes umfasst:
Speichern (S102) von empfangenen Nachrichten in Pufferbereichen, die Nachrichtentypen entsprechen, gemäß den Nachrichtentypen,
Formen (S104) der Nachrichten, die in den Pufferbereichen gespeichert sind, mittels Formwertauslegung und Verkehrsformung,
wobei das Formen (S104) der Nachrichten, die in den Pufferbereichen gespeichert sind, mittels Formwertauslegung und Verkehrsformung Folgendes umfasst:
Auslegen von Formwerten verschiedener Typen von Nachrichten durch eine Vorrichtung gemäß der Verarbeitungskapazität der Vorrichtung für verschiedene Typen von Nachrichten und
Formen der Nachrichten, die in den Pufferbereichen gespeichert sind, gemäß den ausgelegten Formwerten.

2. Verfahren nach Anspruch 1, das vor dem Speichern (S102) von empfangenen Nachrichten in Pufferbereichen, die Nachrichtentypen entsprechen, gemäß den Nachrichtentypen ferner Folgendes umfasst:
Herstellen von Zuordnungsbeziehungen zwischen den Nachrichtentypen und den Pufferbereichen und Speichern der Nachrichten in den Pufferbereichen, die den Nachrichtentypen entsprechen, gemäß den Zuordnungsbeziehungen.

3. Verfahren nach Anspruch 1, wobei das Speichern (S102) von empfangenen Nachrichten in Pufferbereichen, die Nachrichtentypen entsprechen, gemäß den Nachrichtentypen Folgendes umfasst:
Identifizieren der empfangenen Nachrichten und Unterscheiden von Typen der empfangenen Nachrichten gemäß den Identifizierungen.

4. Verfahren nach einem der Ansprüche 1-3, das nach dem Formen (S104) der Nachrichten, die in den Pufferbereichen gespeichert sind, ferner Folgendes umfasst:
Senden (S910) von geformten Nachrichten zum Verarbeiten an eine zentrale Verarbeitungseinheit.

5. Nachrichtenverarbeitungsvorrichtung, die Folgendes umfasst:
ein Speichermodul (22), das dazu ausgelegt ist, empfangene Nachrichten in Pufferbereichen, die Nachrichtentypen entsprechen, gemäß den Nachrichtentypen zu speichern,
ein Verarbeitungsmodul (24), das dazu ausgelegt ist, die Nachrichten, die in den Pufferbereichen gespeichert sind, mittels Formwertauslegung und Verkehrsformung zu formen,
wobei das Verarbeitungsmodul (24) Folgendes umfasst:
eine Auslegungseinheit (52), die dazu ausgelegt ist, Formwerte verschiedener Typen von Nachrichten gemäß der Verarbeitungskapazität der Nachrichtenverarbeitungsvorrichtung für verschiedene Typen von Nachrichten auszulegen; und
eine Verarbeitungseinheit (54), die dazu ausgelegt ist, die Nachrichten, die in den Pufferbereichen gespeichert sind, gemäß den ausgelegten Formwerten zu formen.

6. Vorrichtung nach Anspruch 5, die ferner Folgendes umfasst:
ein Herstellungsmodul (32), das dazu ausgelegt ist, Zuordnungsbeziehungen zwischen den Nachrichtentypen und den Pufferbereichen herzustellen und die Nachrichten in den Pufferbereichen, die den Nachrichtentypen entsprechen, gemäß den Zuordnungsbeziehungen zu speichern.

7. Vorrichtung nach Anspruch 5, wobei das Speichermodul (22) Folgendes umfasst:
eine Identifikationseinheit (42), die dazu ausgelegt ist, die empfangenen Nachrichten zu identifizieren und Typen der empfangenen Nachrichten gemäß den Identifizierungen zu unterscheiden.

8. Vorrichtung nach einem der Ansprüche 5-7, die ferner Folgendes umfasst:
ein Sendemodul (62), das dazu ausgelegt ist, geformte Nachrichten zum Verarbeiten an eine zentrale Verarbeitungseinheit zu senden.

9. Leitungskarte, die die Vorrichtung nach einem der Ansprüche 5-8 umfasst.

## Revendications

1. Procédé de traitement des messages, comprenant :
le stockage (S102) de messages reçus dans des zones tampons correspondant aux types de messages selon les types de messages,
la mise en forme (S104) des messages stockés dans les zones tampons à travers la configuration de valeurs de mise en forme et la mise en forme du trafic,
dans lequel la mise en forme (S104) des messages stockés dans les zones tampons à travers la configuration de valeurs de mise en forme et la mise en forme du trafic comprend :
la configuration, par un dispositif, de valeurs de mise en forme de différents types de messages selon la capacité de traitement du dispositif pour différents types de messages ; et
la mise en forme des messages stockés dans les zones tampons selon les valeurs de mise en forme configurées.

2. Procédé selon la revendication 1, comprenant en outre, avant le stockage (S102) des messages reçus dans des zones tampons correspondant aux types de messages selon les types de messages :
l'établissement de relations de mappage entre les types de messages et les zones tampons, et le stockage des messages dans les zones tampons correspondant aux types de messages selon les relations de mappage.

3. Procédé selon la revendication 1, dans lequel le stockage (S102) des messages reçus dans des zones tampons correspondant aux types de messages selon les types de messages comprend :
l'identification des messages reçus et la distinction de types des messages reçus selon les identifications.

4. Procédé selon l'une des revendications 1 à 3, comprenant en outre, après la mise en forme (S104) des messages stockés dans les zones tampons :
l'envoi (S910) des messages mis en forme à une unité centrale de traitement pour traitement.

5. Dispositif de traitement des messages, comprenant :
un module de stockage (22), configuré pour stocker des messages reçus dans des zones tampons correspondant aux types de messages selon les types de messages ,
un module de traitement (24), configuré pour mettre en forme les messages stockés dans les zones tampons à travers la configuration de valeurs de mise en forme et la mise en forme du trafic,
dans lequel le module de traitement (24) comprend :
une unité de configuration (52), configurée pour configurer des valeurs de mise en forme de différents types de messages selon la capacité de traitement du dispositif de traitement des messages pour différents types de messages ; et
une unité de traitement (54), configurée pour mettre en forme les messages stockés dans les zones tampons selon les valeurs de mise en forme configurées.

6. Dispositif selon la revendication 5, comprenant en outre :
un module d'établissement (32), configuré pour établir des relations de mappage entre les types de messages et les zones tampons, et pour stocker les messages dans les zones tampons correspondant aux types de messages selon les relations de mappage.

7. Dispositif selon la revendication 5, dans lequel le module de stockage (22) comprend :
une unité d'identification (42), configurée pour identifier les messages reçus et pour distinguer des types des messages reçus selon les identifications.

8. Dispositif selon l'une des revendications 5 à 7, comprenant en outre :
un module d'envoi (62), configuré pour envoyer des messages mis en forme à une unité centrale de traitement pour traitement.

9. Carte de lignes, comprenant le dispositif de l'une des revendications 5 à 8.
